# FASCICULE DE BREVET EUROPEEN

(11) **EP 3 455 466 B1**
(45) Date de publication et mention de la délivrance du brevet: **15.04.2020**
(21) Numéro de dépôt: 17727639.1
(22) Date de dépôt: 05.05.2017
(51) Int. Cl.: F01D 9/04, F01D 25/24

(54) **ENSEMBLE POUR TURBOMACHINE COMPRENANT UN DISTRIBUTEUR, UN ÉLÉMENT DE STRUCTURE DE TURBOMACHINE, ET UN DISPOSITIF DE FIXATION**
ANORDNUNG FÜR TURBOMASCHINE MIT EINEM VERTEILER, STRUKTURELLES ELEMENT EINER TURBOMASCHINE UND ANBAUVORRICHTUNG
ASSEMBLY FOR TURBOMACHINERY COMPRISING A DISTRIBUTOR, A STRUCTURAL ELEMENT OF TURBOMACHINERY, AND AN ATTACHMENT DEVICE

(30) Priorité: 09.05.2016 FR 1654136
(43) Date de publication de la demande: 20.03.2019
(73) Titulaire: Safran Aircraft Engines, 75015 Paris (FR)
(72) Inventeur: THOMAS, Axel Sylvain Loïc, 77550 Moissy-Cramayel (FR); JUDET, Maurice Guy, 77550 Moissy-Cramayel (FR); RADELJAK, Gabrijel, 77550 Moissy-Cramayel (FR)
(74) Mandataire: Pichat, Thierry
(86) Numéro de dépôt international: PCT/FR2017/051096
(87) Numéro de publication internationale: WO 2017/194865

(56) Documents cités:
- EP-A1- 1 921 273
- EP-A1- 2 594 743
- EP-A2- 1 445 426

## Description

La présente invention concerne la fixation d'un distributeur sur une turbomachine.

Les turbomachines, qu'elles soient de type turbopropulseur ou turboréacteur, comprennent des distributeurs annulaires montés le long d'un axe de la turbomachine, autour duquel les éléments mobiles de la turbomachine ont un mouvement de rotation. Ces distributeurs permettent de guider et/ou de redresser un flux d'air traversant la turbomachine de l'amont vers l'aval.

Dans la suite du texte, il sera compris que les termes « amont » et « aval » sont définis par rapport au sens d'écoulement ou de circulation d'un fluide, tel que de l'air, à travers la turbomachine, l'amont définissant par où arrive le fluide sur un organe tel un distributeur, l'aval par où le fluide dépasse l'organe.

De même, le terme « axial » se rapport à un axe selon lequel s'écoule l'air depuis l'amont vers l'aval et qui est un axe de révolution de la turbomachine. Le terme « radial » se rapporte, quant à lui, à une direction sensiblement perpendiculaire à la direction axiale.

Les distributeurs peuvent être formés d'une pièce unique comprenant une première partie formant une virole externe, une deuxième partie formant une virole interne et d'une troisième partie formant des aubes joignant la virole interne et la virole externe, ou d'un assemblage de plusieurs pièces, appelés secteurs, comprenant chacun une aube, une partie de virole externe et une partie de virole interne.

Les distributeurs sont montés et fixés sur des éléments de structure de la turbomachine, par exemple un carter fixe de la turbomachine.

Un principe connu pour fixer un distributeur, et plus particulièrement des secteurs de distributeurs, décrit dans le brevet Français FR 2 908 153, au nom de la demanderesse, consiste à monter les secteurs sur le carter en utilisant des boulons (ensemble vis/écrou) et une pièce de maintien en prise avec la partie de virole interne du secteur et le carter.

Si ce principe assure une bonne fixation des secteurs sur le carter, il présente certains inconvénients.

En effet, ce principe de fixation nécessite l'utilisation d'outils pour la manipulation des boulons et une force importante de la part de l'opérateur de montage.

De plus, l'accessibilité réduite à la virole interne et la complexité de fixation rend ce principe long de mise en œuvre. Un autre ensemble comprenant un distributeur annulaire de turbine de turbomachine et un élément annulaire de structure de la turbomachine est connu du document EP2594743.

L'invention a notamment pour but de palier à ces inconvénients en offrant des moyens de montages simples, rapides et durables d'un distributeur sur un élément de structure fixe, tel qu'un carter, d'une turbomachine.

A cet effet, l'invention propose, en premier lieu, un ensemble comprenant un distributeur annulaire de turbine d'une turbomachine, un élément annulaire de structure de la turbomachine coaxial avec le distributeur et au moins un dispositif de fixation du distributeur annulaire avec l'élément annulaire de structure, caractérisé en ce que :
- le distributeur annulaire est traversé par au moins deux passages axiaux, et
- le ou chaque dispositif de fixation comprend :
   ∘ au moins deux pions, solidaires de l'élément annulaire de structure et traversant un desdits passage du distributeur, chaque pion étant en outre traversé par une ouverture débouchante,
   ∘ une première butée transversale d'arrêt axial du distributeur traversant les ouvertures des deux pions ou de deux pions consécutifs, et
   ∘ deux secondes butées de retenue de la de la première butée transversale d'arrêt axial du distributeur, solidaires de l'élément de structure pour maintenir la première butée transversale d'arrêt axial du distributeur dans les ouvertures des pions.

Afin de réaliser un ensemble simple et peu coûteux de fabrication, il peut être prévu que :
- l'élément annulaire de structure présente au moins un premier trou et d'un second trou ;
- les pions son amovibles par rapport à l'élément de structure et traverse chacun un premier trou ;
- les secondes butées de retenue circonférentielle de la première butée transversale d'arrêt axial du distributeur sont logées chacune dans un deuxième trou ; et/ou que
- chaque seconde butée de retenue est amovible par rapport à l'élément de structure et est logée dans un espace du distributeur annulaire.

Ces caractéristiques permettent notamment que les différentes pièces constituant l'ensemble soient de conception simple et puissent être fabriquées indépendamment les unes des autres notamment en vue de faciliter la maintenance et, le cas échéant, le remplacement de l'une seulement des pièces.

Avantageusement, l'élément annulaire de structure présente, sur un bord radial externe, au moins deux oreilles circonférentiellement éloignées l'une de l'autre, ayant chacune au moins un premier trou, et un second trou, et le distributeur annulaire comprend au moins deux pattes circonférentiellement éloignées l'une de l'autre et ayant chacune un passage apte à venir en regard du premier trou d'une oreille de l'élément annulaire de structure.

Les oreilles et les pattes permettent de réduire le volume d'encombrement de la structure et du distributeur respectivement afin notamment de réduire la masse de l'ensemble et, par conséquence, la masse de la turbomachine.

Pour faciliter la maintenance et réduire le temps d'immobilisation de la turbomachine notamment, le distributeur comprend une pluralité de secteurs de distributeur circonférentiellement adjacents, chaque distributeur comportant au moins deux passages et une partie au moins d'un espace.

Pour faciliter le travail des opérateurs lors du montage du distributeur sur la structure fixe, l'un au moins des passages du distributeur ou de chaque secteur présente un diamètre supérieur à un diamètre des pions.

Avantageusement, les pions sont des butées d'arrêt circonférentiel du distributeur pour limiter le déplacement du distributeur, notamment lors des opérations de montage et de maintenance.

L'invention concerne, en second lieu, un procédé d'assemblage de l'ensemble tel que précédemment décrit, qui comprend au moins un premier dispositif de fixation et un second dispositif de fixation adjacents et partageant une des secondes butées, le procédé comprenant les étapes où :
- on positionne les deux pions du premier dispositif de fixation sur l'élément annulaire de structure ;
- on positionne les deux secondes butées du premier dispositif de fixation dans une position de retrait ;
- on insère la première butée du premier dispositif de fixation à travers les ouvertures des pions du premier dispositif de fixation ;
- on décale la première butée du premier dispositif de fixation dans une direction opposée au second dispositif de fixation ;
- on positionne les deux pions du second dispositif de fixation sur l'élément annulaire de structure ;
- on insère la première butée du second dispositif de fixation à travers les ouvertures des pions du second dispositif de fixation ;
- positionner les secondes butées des deux dispositifs de fixation dans une position de blocage, l'une des secondes butées bloquant alors les premières butées des deux dispositifs de fixation.

Avantageusement, le procédé comprend une étape de positionnement des deux pions du premier dispositif et du second dispositif de fixation sur l'élément annulaire de structure est réalisée avant le positionnement de la première butée du premier dispositif et du second dispositif de fixation respectivement.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue de détail en perspective de dessus montrant un ensemble comprenant un distributeur annulaire de turbine de turbomachine, un élément annulaire de structure de turbine de turbomachine coaxial avec le distributeur et un dispositif de fixation du distributeur annulaire avec l'élément annulaire de structure ;
- la figure 2 est une vue schématique montrant un distributeur annulaire et un élément annulaire de structure ;
- la figure 3 est une vue de détail d'un pion du dispositif de fixation, selon un premier mode de réalisation ;
- la figure 4 est une vue montrant un pion selon un deuxième mode de réalisation ;
- la figure 5 est une vue montrant un pion selon un troisième mode de réalisation ;
- la figure 6 est une vue de détail en coupe montrant une butée selon une première variante et un pion du dispositif de fixation de l'ensemble de la figure 1 ;
- la figure 7 est une vue de détail similaire à celle de la figure 1 montrant une butée selon une seconde variante de réalisation ;
- la figure 8 montre une étape d'un procédé de montage de l'ensemble de la figure 1.

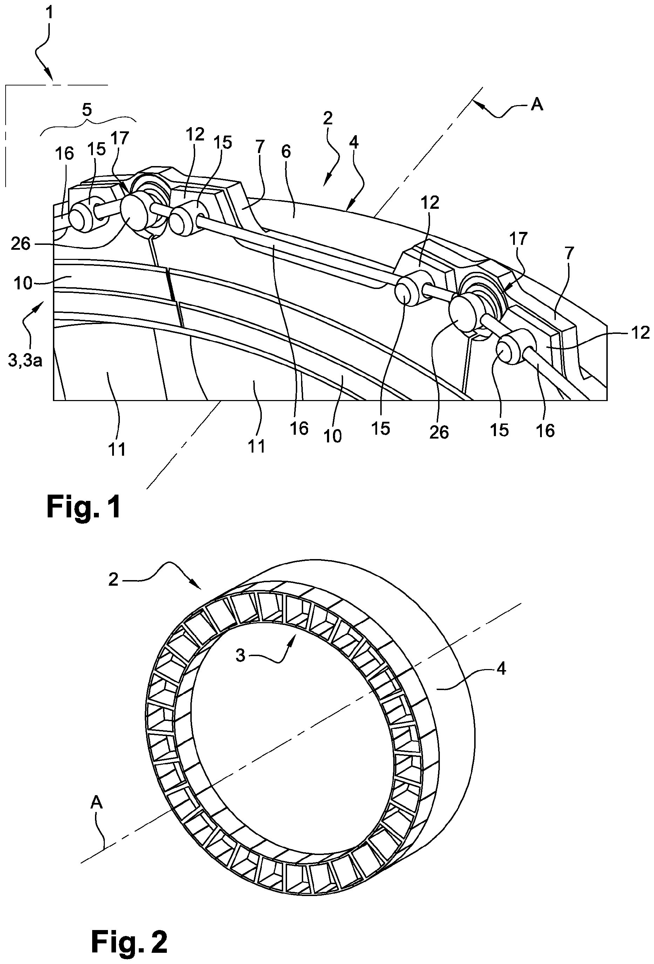

On a représenté, sur la vue de détail de la figure 1, une turbomachine 1 pourvue d'un ensemble 2 comprenant un distributeur 3 annulaire de turbine de turbomachine 1, un élément 4 annulaire de structure de turbine de turbomachine 1 coaxial avec le distributeur 3 par rapport à un axe A, et au moins un dispositif 5 de fixation du distributeur 3 annulaire avec l'élément 4 annulaire de structure, un seul dispositif 5 de fixation étant visible en intégralité sur la figure 1.

L'élément 4 annulaire de structure peut par exemple être un carter d'une turbine haute pression portant extérieurement un anneau de pilotage, par impact d'air, du jeu annulaire entre l'extrémité radialement externe d'une roue de turbine haute pression et un bloc de matériau abradable.

La figure 2 montre de manière schématique l'assemblage du distributeur 3 sur l'élément 4 de structure.

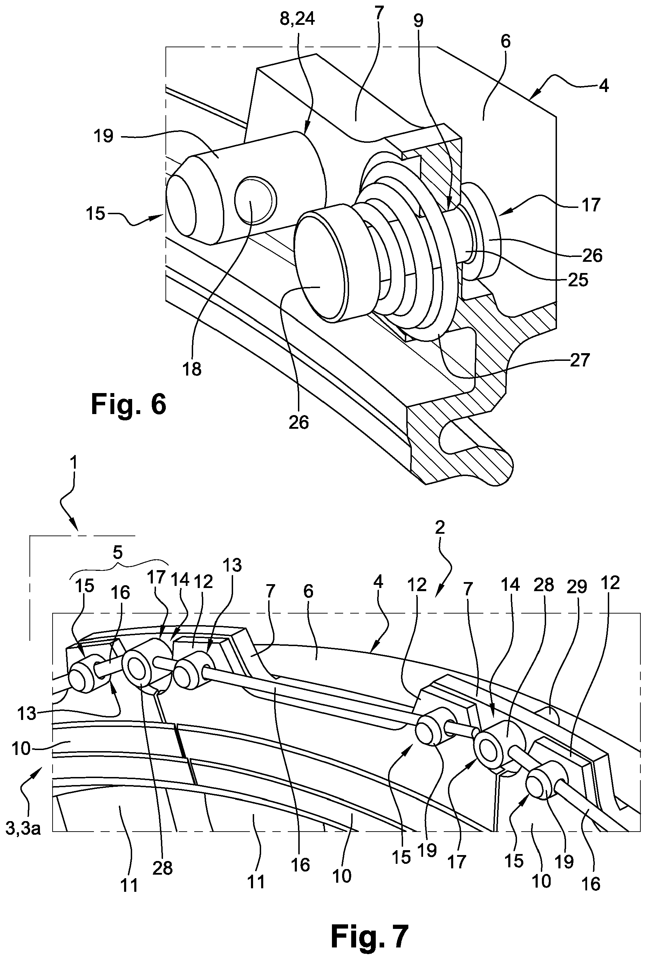

L'élément 4 annulaire de structure, par exemple un carter fixe, présente, sur un bord 6 radial externe, au moins une oreille 7, en l'espère deux, circonférentiellement éloignées l'une de l'autre et pourvues chacune d'au moins un premier trou 8 et d'un second trou 9, les trous 8, 9 étant particulièrement visibles sur la figure 6. En l'espèce, chaque oreille 7 est pourvue de deux premiers trous 8 circonférentiellement éloignés l'un de l'autre et d'un second trou 9 situé entre les deux premiers trous 8.

Selon les figures, le distributeur 3 comprend une pluralité de secteurs 3a qui, ensemble, forment le distributeur 3. Ainsi, on comprendra qu'il est nécessaire d'utiliser un dispositif 5 de fixation pour chacun des secteurs 3a à fixer. Toutefois, dans le cas d'un distributeur 3 formé d'une seule pièce, un seul dispositif 5 de fixation pourrait être utilisé, ou au contraire, une pluralité de dispositifs 5 de fixation.

Chaque secteur 3a comprend une première partie définissant une virole 10 externe, une deuxième partie (non représentée sur les figures) formant une virole interne, et une troisième partie formant une aube 11 joignant la virole interne et la virole 10 externe.

Au droit de la virole 10 externe, chaque secteur 3a du distributeur 3 comprend deux pattes 12 circonférentiellement éloignées l'une de l'autre et ayant chacune un passage 13 apte à venir en regard du premier trou 8 d'une oreille 7 de l'élément 4 de structure. De préférence, et comme cela est représenté sur les dessins, les pattes 12 de chaque secteur 3a font saillie de la virole 10 externe vers l'extérieur du distributeur 3 et sont situées au voisinage de chaque extrémité circonférentielle du secteur 3a.

Le distributeur 3 présente également des espaces 14 formé au moins partiellement entre deux pattes 12 de deux secteurs 3a adjacents. Le rôle de ces espaces 14 sera défini ci-après.

Dans le cas d'un distributeur 3 d'une seule pièce, ce dernier comprend une pluralité de pattes 12 pouvant être par paires ou seules, les pattes 12 ou les paires de pattes 12 étant alors régulièrement réparties circonférentiellement le long de la virole 10 externe. Dans ce cas également, les espaces 14 sont formés entre deux pattes 12 successives.

Le dispositif 5 de fixation, visible en intégralité sur la figure 1, comprend deux pions 15, une première butée 16 transversale d'arrêt axial et deux secondes butées 17.

Chaque pion 15 est apte à venir en prise avec l'élément 4 annulaire de structure en traversant un premier trou 8 de l'oreille 7 et un passage 13 d'une patte 12, en regard l'un de l'autre. Chaque pion 15 est, en outre, traversé par une ouverture 18 débouchante dans laquelle est logé la première butée 16 transversale d'arrêt axial comme nous le verrons ci-après.

Pour faciliter leur insertion, chacun des pions 15 présente une dimension inférieure à celle des passages 13 des pattes 12. En d'autres termes, les passages 13 du distributeur 3 présentent un diamètre supérieur à un diamètre des pions 15 ce qui permet un positionnement précis du distributeur 3 ou de chaque secteur 3a. En outre, l'un des passages 13 présente une forme oblongue pour faciliter le positionnement du distributeur 3 ou de chaque secteur 3a du distributeur 3.

Les pions 15 servent également de butée d'arrêt circonférentiel du distributeur 3 ou de chacun des secteurs 3a du distributeur 3.

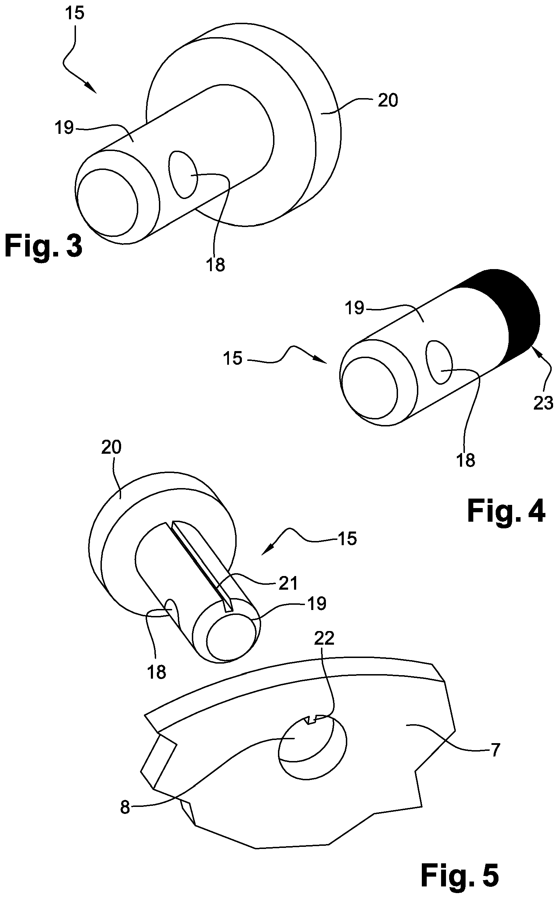

Selon un premier mode de réalisation, représenté à la figure 3, chaque pion 15 est formé d'une tige 19 apte à traverser un premier trou 8 d'une oreille 7 et un passage 13 d'une patte 12, successifs, et une tête 20 apte à venir en appui contre l'oreille 8 pour bloquer le pion 15 selon un mouvement de translation parallèle à l'axe A de révolution de l'ensemble 2. L'ouverture 18 est pratiquée dans la tige 19 sensiblement perpendiculairement à la direction d'extension de la tige 19, autrement dit, sensiblement perpendiculairement à l'axe A de révolution de l'ensemble 2 quand le pion 15 est monté sur l'ensemble 2.

Selon une deuxième variante de réalisation, représentée à la figure 5, le pion 15 est similaire à la première variante mais la tige 19 présente une rainure 21 apte à recevoir une dent 22 solidaire d'un premier trou 8 d'une oreille 7 ou d'un passage 13 d'une patte 12, que le pion 15 traverse, pour bloquer la tige 19 en rotation.

Selon une troisième variante, représentée à la figure 4 le pion 15 est dépourvu de tête 20 et la tige 19 comprend une portion 23 filetée apte à venir en prise hélicoïdale avec un taraudage 24 d'un premier trou 8 de l'élément 4 annulaire de structure.

La première butée 16 transversale d'arrêt axial se présente sous la forme d'une tringle rectiligne pleine et est, de préférence, réalisée dans un matériau résistant tel que de l'acier par exemple. La première butée 16 transversale d'arrêt axial est alors apte à être logée dans l'ouverture 18 de deux pions 15 successifs.

Les secondes butées 17 de retenue circonférentielle des premières butées 16 transversales d'arrêt axial, viennent chacune dans un deuxième trou 9 situés de part et d'autre d'une première butée 16 transversale d'arrêt axial et dans un espace 14 du distributeur, comme nous le verrons ci-après.

Selon une première variante de réalisation, représentée à la figure 6, chaque seconde butée 17 comprend :
- une âme 25 apte à traverser un dit deuxième trou 9 et deux semelles 26 formant chacune un rebord, axialement, de part et d'autre d'une oreille 7, et
- un moyen 27 de rappel pour écarter de l'oreille 7 l'une des semelles 26 pour bloquer circonférentiellement la première butée 16 transversale d'arrêt axial.

De préférence le moyen 27 de rappel est un ressort hélicoïdal mais il pourrait être une lame ou tout autre moyen pouvant se déformer élastiquement et reprendre une position de base en l'absence de sollicitations.

Ainsi, chaque seconde butée 17 peut adopter une position de blocage dans laquelle l'une des semelles 26 est au regard de l'ouverture 18 d'un pion 15 et empêche le retrait de la première butée 16 transversale d'arrêt axial des ouvertures 18 des pions 15, et une position de retrait dans laquelle le moyen 27 de rappel est déformé élastiquement et ladite semelle 26 est écartée de l'ouverture 18 dudit pion 15 de sorte à permettre le retrait de la première butée 16 transversale d'arrêt axial des ouvertures 18 des pions 15 dans lesquelles il se trouve.

Un moyen de retenue en position de retrait des secondes butées 17 peut également être prévu de sorte que l'opérateur n'ait pas à maintenir la seconde butée 17 dans sa position de retrait pour pouvoir sortir la première butée 16 transversale d'arrêt axial.

Avantageusement, dans cette première variante, les butées sont pré-montées sur l'élément 4 annulaire de structure.

Selon une seconde variante, représentée à la figure 7, chaque seconde butée 17 comprend une vis 28 axiale en prise axiale avec l'élément 4 annulaire de structure et s'étendant en regard de l'ouverture 18 d'un pion 15 et d'une première butée 16 transversale d'arrêt axial pour la bloquer.

Par exemple la seconde butée 17 peut comprendre une vis 28 et un écrou 29 ou simplement une vis 28 venant en prise dans un taraudage du second trou 9 de l'oreille7.

Avantageusement, les dimensions des secondes butées 17 et le positionnement des premiers et seconds trous 8, 9 des oreilles 7 sur l'élément 4 de structure sont choisis de sorte que, deux premières butées 16 transversales d'arrêt axial adjacentes puissent être insérés ou retirés des ouvertures 18 des pions 15, indépendamment l'une de l'autre, sans que lesdites premières butées 16 transversales d'arrêt axial viennent buter l'une contre l'autre.

Afin de réduire le nombre de pièces nécessaires et la masse de l'ensemble 2, une seconde butée 17 peut être utilisée pour bloquer deux premières butées 16 transversales d'arrêt axial appartenant chacun à un dispositif 5 de fixation différent, comme cela est représenté sur les figures 1 et 6.

Pour assembler un ensemble 2 tel qu'il vient d'être décrit, un opérateur réalise les opérations ci-après.

Dans un premier temps, l'opérateur positionne un premier secteur 3a du distributeur 3 puis insère les pions 15 de sorte que chaque pion 15 traverse un premier trou 8 de l'oreille 7 et le passage 13 d'une patte 12 et vienne en prise avec l'oreille 7, soit en appui pour des pions 15 selon les premier et deuxième modes de réalisation, soit en prise hélicoïdale avec le taraudage 24 d'un premier trou 8 pour des pions 15 selon le troisième mode de réalisation.

En variante, l'opérateur pourrait d'abord placer les pions 15 puis ensuite positionner les secteurs 3a.

Toutefois les pions 15 pourraient être déjà montés, par frettage par exemple, sur l'élément 4 annulaire de structure ou même venus de matière avec l'élément 4 de matière.

Lorsque les secteurs 3a et les pions 15 sont correctement positionnés, l'opérateur insère une première butée 16 transversale d'arrêt axial dans l'ouverture 18 de deux pions 15 en prise avec un même secteur 3a.

Dans le cas d'un ensemble 2 comprenant des butées 15 selon la première variante, l'opérateur appuie sur l'une des secondes butées 17 à l'encontre du ressort hélicoïdal de sorte que l'ouverture 18 d'un pion 15 adjacent soit accessible puis insère la première butée 16 transversale d'arrêt axial jusqu'à ce qu'elle vienne en contact d'une seconde butée 17 suivante. Lorsque la première butée 16 transversale d'arrêt axial est insérée, l'opérateur peut relâcher la pression qu'il exerce sur la seconde butée 17, cette dernière revenant alors dans sa position de blocage sous la contrainte du ressort hélicoïdal. En revanche, dans le cas d'un ensemble comprenant des secondes butées 17 selon la deuxième variante, l'opérateur doit retirer la vis 28 pour pouvoir insérer la première butée 16 transversale d'arrêt axial dans les ouvertures 18 de deux pions 15. Pour cela l'utilisateur peut utiliser des outils tels que des clés et/ ou des tournevis, ou, si la vis 28 ou l'écrou 29 sont pourvus d'oreilles, manipuler lesdites oreilles.

Lorsque la première butée 16 transversale d'arrêt axial est correctement positionnée, l'opérateur replace la ou chaque seconde butée 17 dans sa position de blocage pour des secondes butées 17 du type de la première variante, ou place une ou plusieurs des secondes butées 17 pour des secondes butées 17 du type de la seconde variante.

Lors de l'assemblage d'un ensemble 2 comprenant deux dispositifs 5 de fixation adjacents partageant une seconde butée 17, l'opérateur place dans leur position de retrait les deux butées 17 entre lesquelles la première butée 16 d'un premier dispositif 5 est logée. L'opérateur décale ensuite la première butée 16 du premier dispositif dans une direction opposée à la première butée 16 du second dispositif 5 adjacent de sorte que la première butée 16 du second dispositif 5 puisse être insérée dans les ouvertures 18 des deux pions 15 du second dispositif 5. Une fois la première butée 16 du second dispositif 5 en place, l'opérateur repositionne correctement la première butée 16 du premier dispositif 5 puis place les secondes butées 17 des deux dispositifs 5 dans leur position de blocage, l'une des secondes butées 17 bloquant les premières butées 16 des deux dispositifs 5 de fixation.

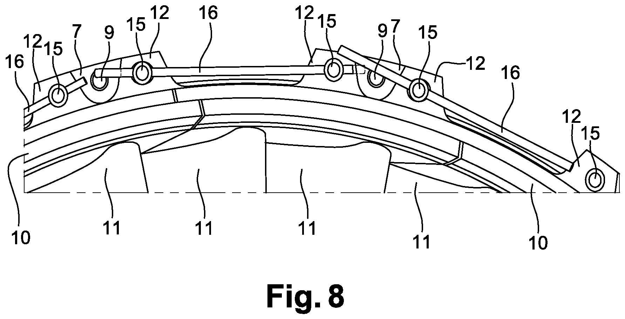

Cette manœuvre est montrée par la figure 8 dans laquelle la première butée 16 déjà positionnée est représentée en traits pointillés avant son décalage.

Pour le démontage de l'ensemble 2, l'opérateur procède à l'inverse du procédé de montage qui vient d'être décrit.

Un ensemble 2, tel qu'il vient d'être décrit, présente de nombreux avantages.

Premièrement le montage et le démontage d'un distributeur 3 ou d'un ou plusieurs secteurs 3a de distributeur 3 peut être réalisé de manière simple et rapide. Pour cela, l'utilisation d'outils est une option en fonction de la variante de secondes butées 17 équipant l'ensemble 2.

Deuxièmement, le nombre de pièces est réduit et de faible masse, ce qui limite la masse de l'ensemble 2 et, par voie de conséquence, la masse de la turbomachine 1.

Troisièmement, le distributeur 3 (ou ses secteurs 3a) est facilement accessible pour un opérateur puisque les secondes butées 17, la première butée 16 transversale d'arrêt axial et les ouvertures 18 des pions 15 sont situées du côté amont de la turbomachine 1, là où l'espace est le moins restreint.

Enfin, le coût du dispositif 5 de fixation est bas grâce à la simplicité de conception de chacune des pièces composant le dispositif 5. Ainsi, le remplacement d'une pièce du dispositif 5 peut être rapide et simple contrairement au remplacement de la pièce de maintien complexe de l'art antérieur par exemple.

## Revendications

1. Ensemble (2) :
- comprenant un distributeur (3) annulaire de turbine d'une turbomachine (1), un élément (4) annulaire de structure de la turbomachine (1) coaxial avec le distributeur (3) et au moins un dispositif (5) de fixation du distributeur (3) annulaire avec l'élément (4) annulaire de structure, le distributeur (3) annulaire étant traversé par au moins deux passages (13) axiaux, et
- étant **caractérisé en ce que** : le ou chaque dispositif (5) de fixation comprend :
∘ au moins deux pions (15), solidaires de l'élément (4) annulaire de structure et traversant un desdits passages (13) du distributeur (3), chaque pion (15) étant en outre traversé par une ouverture (18) débouchante,
∘ une première butée (16) transversale d'arrêt axial du distributeur (3), traversant les ouvertures (18) des deux pions (15) ou de deux pions (15) consécutifs, et
∘ deux secondes butées (17) de retenue de la première butée (16) transversale solidaires de l'élément (4) de structure pour maintenir la première butée (16) transversale dans les ouvertures (18) des pions (15).

2. Ensemble (2) selon la revendication 1, dans lequel l'élément (4) annulaire de structure présente au moins un premier trou (8) et un second trou (9).

3. Ensemble (2) selon la revendication 2, dans lequel le distributeur (3) annulaire comprend au moins deux pattes (12) circonférentiellement éloignées l'une de l'autre et ayant chacune un passage (13) apte à venir en regard du premier trou (8) de l'élément (4) annulaire de structure.

4. Ensemble (2) selon la revendication 2, dans lequel les pions (15) sont amovibles par rapport à l'élément (4) de structure et traversent chacun undit premier trou (8).

5. Ensemble (2) selon la revendication 2, dans laquelle les secondes butées (17) de retenue circonférentielle de la première butée (16) transversale sont logées chacune dans undit deuxième trou (9).

6. Ensemble (2) selon la revendication 2, dans lequel l'élément (4) annulaire de structure présente, sur un bord (6) radial externe, au moins deux oreilles (7) circonférentiellement éloignées l'une de l'autre et pourvues chacune desdits au moins premier (8) et second trous (9).

7. Ensemble (2) selon l'une quelconque des revendications précédentes, dans lequel chaque seconde butée (17) de retenue est amovible par rapport à l'élément (4) de structure et est logée dans un espace (14) du distributeur (3) annulaire.

8. Ensemble (2) selon l'une quelconques des revendications 1 à 6, dans lequel le distributeur (3) comprend une pluralité de secteurs (3a) de secteur circonférentiellement adjacents, chaque distributeur (3a) comportant au moins deux passages (13) et une partie au moins d'un espace (14).

9. Ensemble (2) selon l'une quelconque des revendications précédentes, dans lequel l'un au moins des passages (13) du distributeur (3) présente un diamètre supérieur à un diamètre des pions (15), pour assurer un positionnement précis du distributeur (3).

10. Ensemble (2) selon l'une quelconque des revendications précédentes, dans lequel les pions (15) sont des butées d'arrêt circonférentiel du distributeur.

11. Turbomachine (1) comprenant un ensemble (2) selon l'une quelconque des revendications précédentes.

12. Procédé d'assemblage de l'ensemble (2) selon l'une quelconque des revendications 1 à 10, qui comprend au moins un premier dispositif (5) de fixation et un second dispositif (5) de fixation adjacents et partageant une des secondes butées (17), le procédé comprenant les étapes où :
- on positionne les deux pions (15) du premier dispositif (5) de fixation sur l'élément (4) annulaire de structure ;
- on positionne les deux secondes butées (17) du premier dispositif (5) de fixation dans une position de retrait ;
- on insère la première butée (16) du premier dispositif (5) de fixation à travers les ouvertures (18) des pions (15) du premier dispositif (5) de fixation ;
- on décale la première butée (16) du premier dispositif (5) de fixation dans une direction opposée au second dispositif (5) de fixation ;
- on positionne les deux pions (15) du second dispositif (5) de fixation sur l'élément (4) annulaire de structure ;
- on insère la première butée (16) du second dispositif (5) de fixation à travers les ouvertures (18) des pions (15) du second dispositif (5) de fixation ;
- on positionne les secondes butées (17) des deux dispositifs (5) de fixation dans une position de blocage, l'une des secondes butées (17) bloquant alors les premières butées (16) des deux dispositifs (5) de fixation.

13. Procédé selon la revendication précédente dans lequel étape de positionnement des deux pions (15) du premier dispositif (5) et du second dispositif (5) de fixation sur l'élément (4) annulaire de structure est réalisée avant le positionnement de la première butée (16) du premier dispositif (5) et du second dispositif (5) de fixation respectivement.

## Patentansprüche

1. Anordnung (2), enthaltend einen ringförmigen Turbinenleitapparat (3) eines Turbotriebwerks (1), ein ringförmiges Strukturelement (1) des Turbotriebwerks (1), das koaxial zum Leitapparat (3) verläuft, und zumindest eine Befestigungsvorrichtung (5) zum Befestigen des ringförmigen Leitapparates (3) mit dem ringförmigen Strukturelement (4), wobei der ringförmige Leitapparat (3) von zumindest zwei axialen Durchgängen (13) durchsetzt wird,
wobei die Anordnung **dadurch gekennzeichnet ist, dass**
die bzw. jede Befestigungsvorrichtung (5) enthält:
o zumindest zwei Zapfen (15), die mit dem ringförmigen Strukturelement (4) fest verbunden sind und sich durch einen der genannten Durchgänge (13) des Leitapparates (3) erstrecken, wobei jeder Zapfen (15) ferner von einer Durchgangsöffnung (18) durchsetzt wird,
o einen quer verlaufenden ersten Arretieranschlag (16) zum axialen Arretieren des Leitapparates (3), der sich durch die Öffnungen (18) der beiden Zapfen (15) oder von zwei aufeinanderfolgenden Zapfen (15) erstreckt, und
o zwei zweite Halteanschläge (17) zum Halten des quer verlaufenden ersten Anschlags (16), die mit dem Strukturelement (4) fest verbunden sind, um den quer verlaufenden ersten Anschlag (16) in den Öffnungen (18) der Zapfen (15) zu halten.

2. Anordnung (2) nach Anspruch 1,
wobei das ringförmige Strukturelement (4) mindestens eine erste Lochung (8) und eine zweite Lochung (9) aufweist.

3. Anordnung (2) nach Anspruch 2,
wobei der ringförmige Leitapparat (3) zumindest zwei Laschen (12) enthält, die in Umfangsrichtung voneinander beabstandet sind und jeweils einen Durchgang (13) aufweisen, der dazu geeignet ist, der ersten Lochung (8) des ringförmigen Strukturelements (4) gegenüberliegend zu liegen zu kommen.

4. Anordnung (2) nach Anspruch 2,
wobei die Zapfen (15) vom Strukturelement (4) lösbar sind und sich jeweils durch die erste Lochung (8) erstrecken.

5. Anordnung (2) nach Anspruch 2,
wobei die zweiten Anschläge (17) zum umfänglichen Halten des quer verlaufenden ersten Anschlags (16) jeweils in der zweiten Lochung (9) aufgenommen sind.

6. Anordnung (2) nach Anspruch 2,
wobei das ringförmige Strukturelement (4) an einem radial äußeren Rand (6) zumindest zwei Lappen (7) aufweist, die umfänglich voneinander beabstandet sind und jeweils mit der zumindest einen ersten (9) und zweiten Lochung (9) versehen sind.

7. Anordnung (2) nach einem der vorangehenden Ansprüche,
wobei der zweite Halteanschlag (17) vom Strukturelement (17) lösbar ist und in einem Raum (14) des ringförmigen Leitapparats (3) aufgenommen ist.

8. Anordnung (2) nach einem der Ansprüche 1 bis 6,
wobei der Leitapparat (3) eine Mehrzahl von umfänglich benachbarten Leitapparatsektoren (3a) enthält, wobei jeder Sektor (3a) zumindest zwei Durchgänge (13) und zumindest einen Teil eines Raums (14) enthält.

9. Anordnung (2) nach einem der vorangehenden Ansprüche,
wobei zumindest einer der Durchgänge (13) des Leitapparats (3) einen Durchmesser aufweist, der größer als ein Durchmesser der Zapfen (15) ist, um eine genaue Positionierung des Leitapparats (3) sicherzustellen.

10. Anordnung (2) nach einem der vorangehenden Ansprüche,
wobei die Zapfen (15) Anschläge zum umfänglichen Arretieren des Leitapparats sind.

11. Turbotriebwerk (1) mit einer Anordnung (2) nach einem der vorangehenden Ansprüche.

12. Verfahren zum Montieren der Anordnung (2) nach einem der Ansprüche 1 bis 10, die zumindest eine erste Befestigungsvorrichtung (5) und eine zweite Befestigungsvorrichtung (5) enthält, die aneinandergrenzen und einen der zweiten Anschläge (17) teilen, wobei das Verfahren die Schritte umfasst:
- Positionieren der beiden Zapfen (15) der ersten Befestigungsvorrichtung (5) am ringförmigen Strukturelement (4);
- Positionieren der beiden zweiten Anschläge (17) der ersten Befestigungsvorrichtung (5) in einer Rückzugsstellung;
- Einfügen des ersten Anschlags (16) der ersten Befestigungsvorrichtung (5) durch die Öffnungen (18) der Zapfen (15) der ersten Befestigungsvorrichtung (5) hindurch;
- Versetzen des ersten Anschlags (16) der ersten Befestigungsvorrichtung (5) in einer der zweiten Befestigungsvorrichtung (5) entgegengesetzten Richtung;
- Positionieren der beiden Zapfen (15) der zweiten Befestigungsvorrichtung (5) am ringförmigen Strukturelement (4);
- Einfügen des ersten Anschlags (16) der zweiten Befestigungsvorrichtung (5) durch die Öffnungen (18) der Zapfen (15) der zweiten Befestigungsvorrichtung (5) hindurch;
- Positionieren der zweiten Anschläge (17) der beiden Befestigungsvorrichtungen (5) in einer Sicherungsstellung, wobei einer der zweiten Anschläge (17) dann die ersten Anschläge (16) der beiden Befestigungsvorrichtungen (5) sichert.

13. Verfahren nach dem vorangehenden Anspruch,
wobei der Schritt des Positionierens der beiden Zapfen (15) der ersten Befestigungsvorrichtung (5) und der zweiten Befestigungsvorrichtung (5) am ringförmigen Strukturelement (4) vor dem Positionieren des ersten Anschlags (16) der ersten Befestigungsvorrichtung (5) bzw. der zweiten Befestigungsvorrichtung (5) erfolgt.

## Claims

1. An assembly (2):
- comprising an annular turbine distributor (3) for turbomachinery (1), an annular structural element (4) of the turbomachinery (1), coaxial with the distributor (3) and at least one device (5) for attaching the annular distributor (3) with the annular structural element (4), the annular distributor (3) being crossed by at least two axial passages (13), and,
- being **characterized in that**: the or each attachment device (5) comprises:
o at least two pins (15) which are secured to the annular structural element (4) and passing through one of said passages (13) of the distributor (3), with each pin (15) being further crossed by a through-opening (18),
o a first transverse stop (16) for stopping the distributor (3) axially and passing through the openings (18) of the two pins (15) or two consecutive pins (15), and
o two second stops (17) for retaining the first transverse stop (16) which are secured to the structural element (4) to retain the first transverse stop (16) in the openings (18) of the pins (15).

2. An assembly (2) according to claim 1, wherein the annular structural element (4) has at least one first hole (8) and one second hole (9).

3. An assembly (2) according to claim 2, wherein the annular distributor (3) comprises at least two tabs (12) positioned circumferentially away from one another and each having a passage (13) adapted to come opposite the first hole (8) of the annular structural element (4).

4. An assembly (2) according to claim 2, wherein the pins (15) are movable relative to the structural element (4) and each pass through one said first hole (8).

5. An assembly (2) according to claim 2, wherein the second stops (17) for circumferentially retaining the first transverse stop (16) are each accommodated in one said second hole (9).

6. An assembly (2) according to claim 2, wherein the annular structural element (4) has, on a radially external edge (6), at least two lugs (7) positioned circumferentially away from one another and each provided with said at least first (8) and second holes (9).

7. An assembly (2) according to any one of the preceding claims, wherein each second retaining stop (17) is movable relative to the structural element (4) and is accommodated in a space (14) of the annular distributor (3).

8. An assembly (2) according to any one of claims 1 to 6, wherein the distributor (3) comprises a plurality of circumferentially adjacent sectors (3a), with each distributor (3a) having at least two passages (13) and at least a portion of a space (14).

9. An assembly (2) according to any one of the preceding claims, wherein at least one of the passages (13) of the distributor (3) has a diameter greater than a diameter of the pins (15) to ensure an accurate positioning of the distributor (3).

10. An assembly (2) according to any one of the preceding claims, wherein the pins (15) are circumferential stops of the distributor.

11. Turbomachinery (1) comprising an assembly (2) according to any one of the preceding claims.

12. A method for assembling the assembly (2) according to any one of claims 1 to 10, which comprises at least a first attachment device (5) and a second, adjacent, attachment device (5) sharing one of the second stops (17), with the method comprising the following steps:
- positioning the two pins (15) of the first attachment device (5) on the annular structural element (4);
- positioning the two second stops (17) of the first attachment device (5) in a retracted position;
- inserting the first stop (16) of the first attachment device (5) through the openings (18) of the pins (15) of the first attachment device (5);
- shifting the first stop (16) of the first attachment device (5) in a direction opposite the second attachment device (5);
- positioning the two pins (15) of the second attachment device (5) on the annular structural element (4);
- inserting the first stop (16) of the second attachment device (5) through the openings (18) of the pins (15) of the second attachment device (5);
- positioning the second stops (17) of the two attachment devices (5) in a locking position, with one of the second stops (17) then locking the first stops (16) of the two attachment devices (5).

13. A method according to the preceding claim, wherein the step of positioning the two pins (15) of the first attachment device (5) and the second attachment device (5) on the annular structural element (4) is carried out prior to the positioning of the first stop (16) of the first attachment device (5) and the second attachment device (5) respectively.
